# EUROPÄISCHE PATENTSCHRIFT

(11) **EP 2 503 183 B1**
(45) Veröffentlichungstag und Bekanntmachung des Hinweises auf die Patenterteilung: **12.06.2013**
(21) Anmeldenummer: 11002369.4
(22) Anmeldetag: 22.03.2011
(51) Int. Cl.: F16G 3/02

(54) **Verbinderanordnung zum Verbinden von Bandenden**
Splicing arrangement for connecting the ends of a belt
Agencement de connecteur pour connecter des extrémités de bandes

(43) Veröffentlichungstag der Anmeldung: 26.09.2012
(73) Patentinhaber: Sefar AG, 9410 Heiden (CH)
(72) Erfinder: Dür, Hansjörg, 6858 Schwarzach (AT)
(74) Vertreter: Wunderlich, Rainer

(56) Entgegenhaltungen:
- EP-A1- 0 760 438
- EP-A1- 1 479 623
- FR-A1- 2 301 738
- US-A- 4 344 209
- US-A1- 2001 045 344

## Beschreibung

Die Erfindung betrifft eine Verbinderanordnung zum Verbinden von Bandenden mit zwei streifenförmigen Verbinderelementen, die jeweils an einer ersten Längsseite einen Befestigungsabschnitt zum Befestigen an einem Bandende und entlang einer zweiten Längsachse einen Verbindungsabschnitt mit einem Verbindungsprofil aufweisen, welches in ein korrespondierendes Verbindungsprofil des jeweils anderen Verbinderelementes passend eingreift, wobei sich die erste Längsseite und die zweite Längsseite in einer Längsrichtung erstrecken.

Aus DE 10 2004 061 226 A1 ist eine gattungsgemäße Verbinderanordnung zum Verbinden von Bahnenden aus einem flexiblen Material bekannt. Die Verbinderanordnung besteht aus zwei bandförmigen Elementen, die über ihre an ihren Längsseiten befindlichen Konturen jeweils formschlüssig ineinander greifen, wobei zusätzlich eine Nut-Federverbindung vorgesehen ist. Die Konturen beider Elemente weisen ineinander greifende Zähne auf, wobei jeder Zahn eine Bohrung in Längsrichtung seines Elements aufweist. Durch die Bohrungen beider Elemente, die auf einer Linie liegen, wird ein Stift durchgeführt, der die Elemente miteinander verriegelt. Hierdurch wird eine zuverlässige Verbindung eines umlaufenden ebenen Bandes erreicht.

Für manche Anwendungen ist es gewünscht, wenn ein umlaufendes Band aus einer Bandebene heraus verformbar ist. Das ist zum Beispiel dann der Fall, wenn das Umlaufband in dem Umlaufprozess zumindest teilweise an den Rändern gebogen wird, um eine Wannenform zu bilden.

Aus DE 44 16 079 A1 geht eine flexible Verbindung mit einem Kupplungsstab zum Verbinden derartiger Förderbänder hervor. An den Enden der Bänder sind jeweils nebeneinander mehrere metallische Verbindungselemente angeordnet, welche zueinander bewegbar sind. Die Verbindungselemente weisen Kupplungsösen auf, die sich zum Verbinden mithilfe eines Kupplungsstabes in einer fluchtenden Lage befinden. Der Kupplungsstab ist dabei flexibel aus mehreren Kernstücken und einem Hüllelement in Form eines rohrförmigen Mantelstückes aufgebaut. Die Länge der Kernstücke ist so gewählt, dass sie sich jeweils durch mehr als zwei Kupplungsösen erstrecken. Die Justierung und Befestigung der Vielzahl von Verbindungselementen entlang der Bahnkanten ist sehr zeit- und arbeitsaufwendig. Zudem hängt die Biegsamkeit des Bandes von der Größe der Verbindungselemente ab.

Aus DE 69 292 55 ist ein Kupplungselement für Nahtverbinder, insbesondere an Klipper-Nähten bekannt. Die Klipper-Naht besteht dabei aus Haken, die z. B. in die Enden eines Papiermaschinensiebes eingesetzt sind. In von den Haken gebildeten Ösen wird ein Kupplungselement eingeführt, wodurch eine scharnierartige Gelenkverbindung ausgebildet wird. Das Kupplungselement besteht dabei aus zwei in der Nahtebene parallel nebeneinander liegenden Stäben und einem Kunststoffschlauch, der die Stäbe umschließt. Die Stäbe weisen an wenigstens einer Berührungsseite einen runden Querschnitt auf, um Gleit- oder Abrollbewegungen während eines Schwenkens der Verbinder um die Gelenkachse zu ermöglichen.

In der US 4,344,209 ist die Verbindung zweier Bandenden über eine Klippernaht bekannt. Die Klippernaht ist über eine Hakenanordnung gebildet, wobei jeder einzelne Haken aus einer Schleife mit einem kurzen und langen Schenkel besteht und die Schenkel an ihrem Ende eine Zacke aufweisen, die sich jeweils an der oberen bzw. unteren Seite der Leiste des jeweiligen Verbinderelementes einkrallen.

Aus der EP 1 479 623 ist ein Transportband bekannt, welches aus plattenförmigen, kettengliederartigen Modulen aufgebaut ist. Zum Bilden von Biegezonen innerhalb der Module können diese aus unterschiedlichen Materialien spritzgegossen sein. Der Erfindung liegt die **Aufgabe** zugrunde, eine Verbinderanordnung zu schaffen, die eine gewünschte Flexibilität erlaubt und gleichwohl einfach aufgebaut und anbringbar ist.

Diese Aufgabe wird erfindungsgemäß durch eine Verbinderanordnung zum Verbinden von Bandenden mit den Merkmalen des Anspruchs 1 gelöst. Bevorzugte Ausführungsformen sind in den abhängigen Ansprüchen angegeben.

Ein Grundgedanke der Erfindung kann darin gesehen werden, eine stabile Verbindung mit streifenförmigen Verbinderelementen zu schaffen, die definiert biegsam sind. Die durchgehenden Verbinderelemente weisen hierzu jeweils eine oder mehrere Biegezonen auf, in denen die Biegesteifigkeit gegenüber den angrenzenden steiferen Normalzonen des Verbinderelementes herabgesetzt ist. Die streifenförmigen Verbinderelemente können einfach hergestellt, insbesondere aus Kunststoff gegossen, und an den Bandkanten befestigt werden.

Die zumindest eine Biegezone verläuft dabei quer zu einer Längsseite eines Verbinderelements, wobei der Verlauf der Biegezone nicht auf einen bestimmten Winkel bezüglich der Längsrichtung festgelegt ist. Bevorzugt verlaufen die Biegezonen rechtwinklig zur Längsrichtung. Durch die Biegezone ist es möglich die Verbinderanordnung entlang einer Achse parallel zur Umlaufrichtung zu biegen wodurch auch Umlaufbänder verbunden werden können, die während eines Verfahrens wannenförmig gebogen werden. Die erfindungsgemäße Verbinderanordnung kann für alle Arten von Umlaufbändern verwendet werden, insbesondere für Filterbänder oder Förderbänder.

Erfindungsgemäß ist das Verbindungsprofil aus vorstehenden Zähnen und dazwischen liegenden Ausnehmungen gebildet, wobei sich Zähne und Ausnehmungen abwechselnd entlang der Längsseite eines Verbinderelementes aneinander reihen und die Zähne eines Verbindungsprofils eines Verbinderelementes in die Ausnehmungen des korrespondierenden Verbindungungsprofils des jeweils anderen Verbinderelementes passend eingreifen. Die Aufteilung des Verbindungsprofils durch Zähne und Ausnehmungen stabilisiert die Verbindung zwischen den zwei Verbinderelementen, da Spannkräfte, die bei einem Verbiegen der Verbinderanordnung auftreten, vermindert sind und dadurch die Passform der Verbinderanordnung auch im gebogenem Zustand erhalten bleibt. Die Passform ermöglicht auch eine dichte Verbindung zwischen den verbundenen Bandenden was insbesondere den Einsatz bei Filterbändern begünstigt. Vorzugsweise kann der Eingriff zwischen einem Zahn und der korrespondierenden Ausnehmung durch eine Nut-Federverbindung an den Frontkanten unterstützt werden, wobei jeweils die Zähne und die Ausnehmungen entsprechend eine Nut und eine Feder aufweisen. Die Zähne können auch als wellenförmige Kontur ausgestaltet sein. Bevorzugt haben die Zähne eine im Wesentlichen rechteckige Kontur und besitzen jeweils dieselbe Größe.

Nach der Erfindung ist vorgesehen, dass die Verminderung der Biegesteifigkeit in der Biegezone durch eine Änderung, insbesondere Verkleinerung, einer Querschnittsfläche gegenüber der Querschnittsfläche der angrenzenden Normalzone gebildet ist. Durch eine Verkleinerung der Querschnittsfläche kann die Biegesteifigkeit auf einfache Weise herabgesetzt werden. Die Verkleinerung der Querschnittsfläche muss dabei nicht gleichmäßig in der Biegezone verlaufen, wodurch es möglich ist, Bereiche innerhalb der Biegezone auszubilden, die aufgrund verschiedener Querschnittsflächen unterschiedliche Biegesteifigkeiten aufweisen. Die Biegefähigkeit der Verbinderandordnung kann dadurch flexibel angepasst werden.

In der Verbinderandordnung sind die Änderungen der Querschnittsfläche in Form von wenigstens einer quer verlaufenden Rille an zumindest einer Oberseite des Verbinderelementes ausgebildet.

Die wenigstens eine Rille kann auf einfache Weise, etwa beim Gießen oder nachträglich durch Einpressen oder Materialabtrag in das Verbinderelement eingebracht werden. Vorzugsweise beträgt der Querschnitt einer Rille im Wesentlichen dieselbe Größenordnung wie die Tiefe der Rille, um die Stabilität der Verbinderanordnung zu erhalten. Durch die Anzahl der in die Verbinderanordnung eingebrachten Rillen kann die Biegefähigkeit der Verbinderanordnung je nach Bedarf auf einfache Weise angepasst werden. Die Querschnittsform der Rille ist nicht festgelegt, wobei bevorzugt eine V-Form oder eine Halbrundform verwendet wird. Grundsätzlich ist es auch möglich, Rillen über die gesamte Breite anzuordnen.

Weiterhin ist es vorteilhaft, dass in der Normalzone und der Biegezone Zähne und Ausnehmungen angeordnet sind und dass in der Biegezone die Rillen sich quer von der ersten Längsseite zur zweiten Längsseite über den Befestigungsabschnitt und den Verbindungsabschnitt des Verbinderelementes erstrecken. Dadurch, dass sich die Biegezone auch über die Zähne und Ausnehmungen erstreckt, ist die Biegsamkeit des Verbinderelements stark verbessert. Die Rillen sorgen dabei für eine einheitliche Biegesteifigkeit des Befestigungsabschnitts und des Verbindungsabschnitt entlang einer Rille. Die einheitliche Biegesteifigkeit verringert Spannungen innerhalb des Verbinderlementes zwischen dem Befestigungs- und dem Verbinderabschnitt, wenn das Verbinderelement gebogen ist.

In einer weiteren Ausführungsform der Verbinderanordnung weist der Befestigungsabschnitt mindestens einen langgezogenen Schenkel auf und an einer Außenseite des Schenkels sind Längsrippen angeordnet, die parallel zur Längsrichtung des Verbinderelementes verlaufen. Der Befestigungsabschnitt bietet durch den langgezogene Schenkel ausreichend Platz zur Befestigung eines Bandendes. Die Befestigung des Bandendes an dem Schenkel kann z.B. durch Nähen, Heften, Schweißen, Angießen, Ankleben etc. erfolgen. Der Befestigunsabschnitt kann beliebig viele Schenkel aufweisen. In einer bevorzugten Ausführungsform der Erfindung sind zwei Schenkel vorgesehen, zwischen denen das Band eingefasst ist. Das Band ist insbesondere ein Filtermedium, insbesondere ein gewebtes Filtertuch.

Die an einer Außenseite des Schenkels verlaufenden Längsrippen unterstützen die Stabilität des Verbinderelements. Gleichzeitig ist der Zwischenraum zwischen zwei Längsrippen geschützt, wodurch es vorteilhaft die Befestigung des Bandes an den Befestigungsabschnitt vorzugsweise jeweils zwischen den Rippen angeordnet ist.

In einer weiteren Ausführungsform der Erfindung ist es vorgesehen, dass sich die wenigstens eine quer verlaufende Rille durch die Längsrippen fortsetzt und die Längsrippen in den Kreuzungsbereichen zwischen den Längsrippen und der Rille unterbrochen sind. Dadurch wird die Biegsamkeit des Verbinderelements entlang der Rille nicht durch die Längsrippen eingeschränkt. Gleichzeitig kann auch die Biegesteifigkeit entlang des Raumes zwischen den Längsrippen vermindert sein, wodurch das Verbinderelement auch entlang der Achsen zu den Rippen parallel verlaufenden Achsen gebogen werden kann

Erfindungsgemäß verläuft die wenigstens eine Rille über das Verbindungsprofil und über mindestens eine Zahnoberseite. Bevorzugt verläuft die jeweils eine Rille im Wesentlichen in der Mitte des Zahnes. Dadurch sind durch Biegekräfte verursachte Spannungen symmetrisch innerhalb der Zähne verteilt.

Alternativ kann es vorgesehen sein, dass die Verminderung der Biegesteifigkeit in der Biegezone durch ein Material gebildet ist, welches sich von dem Material der angrenzenden Normalzone unterscheidet und dessen Biegesteifigkeit gegenüber der Biegesteifigkeit des Materials der angrenzenden Normalzone herabgesetzt ist. So kann das Verbinderelement bereichsweise aus unterschiedlichen Kunststoffen gegossen sein. Die Biegesteifigkeit in der Biegezone kann auch zusätzlich durch die Verminderung der Querschnittsfläche, insbesondere durch Rillen herabgesetzt sein, wodurch die Biegsteifigkeit flexibler angepasst werden kann.

In einer weiteren Ausführungsform ist es bevorzugt, dass jeder Zahn eine Durchgangsbohrung in Längsrichtung aufweist und dass in einem ineinandergreifenden Verbindungszustand beider Verbinderelemente die Bohrungen der Zähne beider Verbinderelemente einen Durchgang zur Aufnahme eines Verriegelungselementes bilden. Die Durchgangsbohrung ermöglicht das Einführen eines Verriegelungselementes, wodurch die Verbindung auch bei hohen Zugkräften zwischen den beiden Bandenden stabil bleibt. Vorzugsweise verläuft die Bohrung vollständig innerhalb der Zähne. Die Form der Bohrung ist dabei nicht festgelegt und kann beispielsweise rechteckig, oval oder rund sein.

Dabei ist es vorteilhaft, dass das Verriegelungselement wenigstens einen Normalabschnitt mit einer ersten Biegesteifigkeit und einen Biegeabschnitt mit einer zweiten Biegesteifigkeit aufweist, welche kleiner als die erste Biegesteifigkeit ist. Die Biegesteifigkeit kann dadurch längs des Verriegelungselements im Verbindungszustand beider Verbinderelemente je nach Bedarf über das eingesetzte Verriegelungselement verändert werden. Dadurch könnten in einzelnen Bereichen der Verbinderanordnung unterschiedliche Biegsamkeiten erreicht werden. Vorzugsweise kann an der Spitze des Verriegelungselements ein Einführelement angebracht sein, welches einen geringeren Querschnitt als das Verriegelungselement aufweist, und dadurch das Einführen des Verriegelungselementes vereinfacht.

In einer weiteren Ausführungsform ist der Biegeabschnitt durch ein Drahtseil und der Normalabschnitt durch ein Stiftelement gebildet, welche miteinander verbunden sind. Anstelle eines Drahtes könnte für den Biegeabschnitt auch ein Bowdenzug oder auch ein Kunststoffseil oder -stab verwendet werden. Das Stiftelement ist in der Regel steif und kann z.B. aus Metall, Stahl oder Federstahl bestehen. Jedoch sind auch weitere Materialien möglich, die die erforderlichen Bedingungen erfüllen.

Bevorzugt ist der Biegeabschnitt des Verriegelungselements im eingesetzten Zustand in der Verbinderanordnung in der Biegezone der Verbinderelemente angeordnet. Dadurch lässt sich eine erhöhte Festigkeit in den steifen Bereichen und gleichzeitig eine verbesserte Biegsamkeit in der Biegezone erreichen.

Die Erfindung wird nachfolgend anhand von den bevorzugten Ausführungsbeispielen weiter beschrieben, welche schematisch in den beiliegenden Zeichnungen dargestellt sind. In den Zeichnungen zeigen:
- Fig. 1: eine Schrägansicht eines erfindungsgemäßen Verbinderelements;
- Fig. 2: eine Seitenansicht eines erfindungsgemäßen Verbinderelements;
- Fig. 3: eine Seitenansicht des Verbindungsprofils eines erfindungsgemäßen Verbinderelements;
- Fig. 4: eine Schrägansicht einer erfindungsgemäßen Verbinderanordnung mit Verriegelungselement und
- Fig. 5: Aufsicht auf eine erfindungsgemäße Verbinderanordnung.

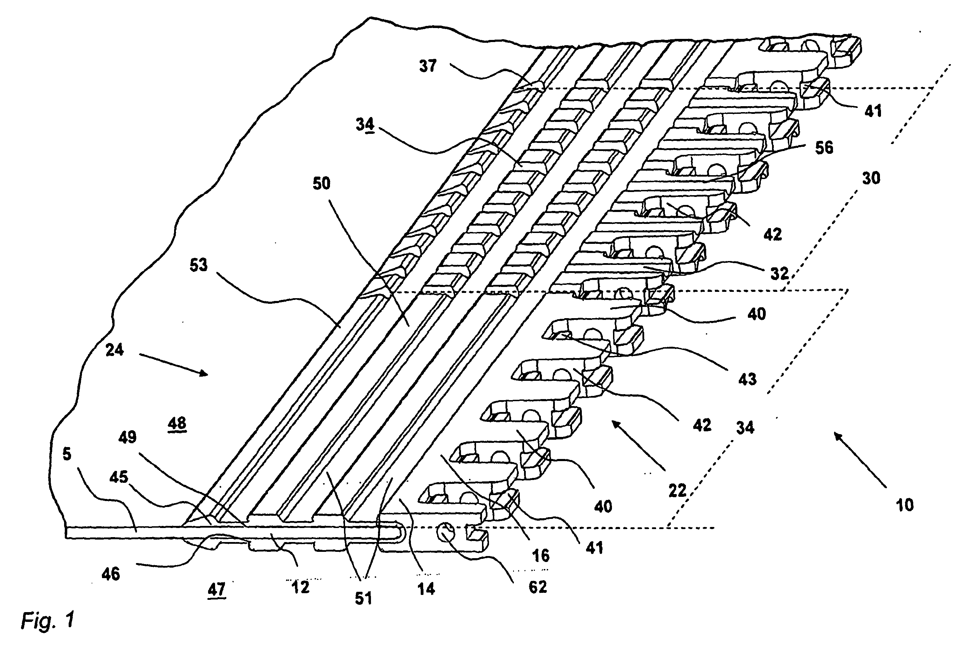

In Figur 1 ist eine Seitenansicht eines erfindungsgemäßen Verbinderelements 10 gezeigt. Das Verbinderelement 10 weist an einer ersten Längsseite 22 einen Verbindungsabschnitt 14 mit einem Verbindungsprofil 16 auf, das aus vorstehenden Zähnen 40 und dazwischen liegenden Ausnehmungen 42 gebildet ist. Die Zähne 40 haben eine im Wesentlichen rechteckige Form und reihen sich abwechselnd mit den Ausnehmungen 42 entlang der Längsseite 22 aneinander. Die Zähne 40 eines Verbinderelementes 10 können dabei passend in die Ausnehmungen 42 eines zweiten Verbinderelementes 10 eingreifen. Der Verbindungsabschnitt 14 ist zusammen mit dem Verbindungsprofil 16 und seinen Zähnen 40 und Ausnehmungen 42 einstückig aus Kunststoff gefertigt.

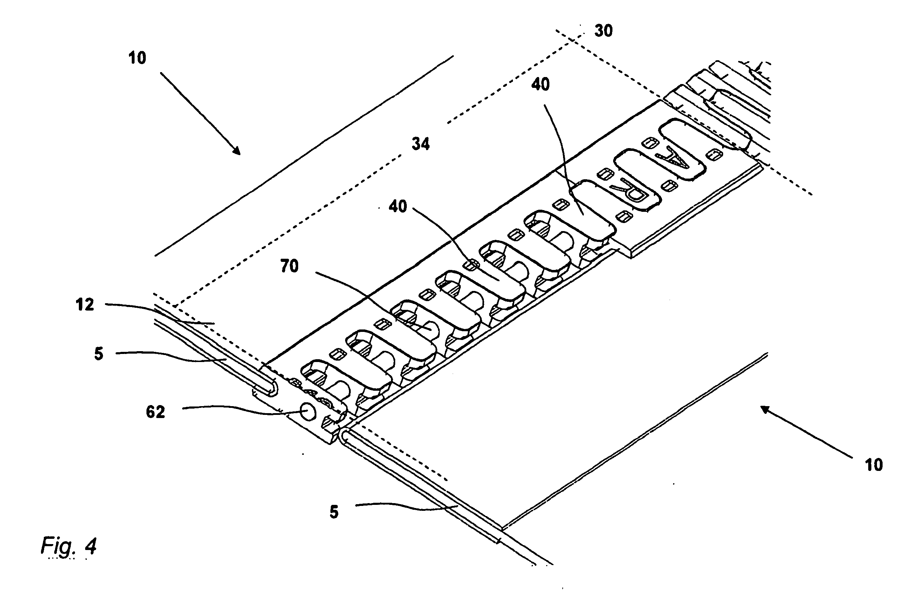

Jeder Zahn 40 des Verbindungsprofils 16 ist mit einer Durchgangsbohrung 62 in Längsrichtung versehen. Wenn zwei Verbindungselemente 10 mit ihren jeweiligen Verbindungsprofilen 16 über Zähne 40 und Ausnehmungen 42 passend ineinander greifen, bilden die einzelnen Durchgangsbohrungen 62 der Zähne 40 der Verbindungselemente 10 ein Art Kanal aus, durch den ein in Figur 4 gezeigtes Verriegelungselement 70 von außen her eingeschoben werden kann und die Verbindungselemente 10 fest miteinander verriegelt. Der Eingriff der Zähne 40 eines Verbinderelements 10 in die Ausnehmungen 42 des jeweils anderen Verbinderelementes 10 wird zusätzlich dadurch unterstützt, dass die Kontaktseite der Zähne 42 als Nut 41 und die Kontaktseite der Ausnehmungen 42 als Feder 43 ausgebildet ist.

An einer zweiten Längsseite 24 des Verbinderelements 10 befindet sich ein Befestigungsabschnitt 12, der zwei langgezogenen Schenkel 45, 46 aufweist und mit dem Verbindungsabschnitt 14 verbunden ist. Die langgezogenen Schenkel 45, 46 sind aus einem Gewebematerial 49 gefertigt. An der Außenseite 48 eines Schenkels 45 sind Längsrippen 50 aus Kunststoff angebracht, die das Gewebematerial 49 des Schenkels 45 verstärken.

Das Verbinderelement 10 ist unterteilt in Normalzonen 34 und Biegezonen 30. Im Gegensatz zur Normalzone 34 weist das Verbinderelement 10 in der Biegezone 30 Rillen 32 auf, die sich quer über das Verbinderelement 10 von der einen Längsseite 22 zur gegenüberliegenden anderen Längsseite 24 erstrecken. Die Rillen 32 verlaufen in der Mitte der Zähne 40 und Ausnehmungen 42 sowohl an den Zahnoberseiten 56 und den Ausnehmungsoberseiten 58 als auch an den gegenüberliegenden Unterseiten.

Im Befestigungsabschnitt 12 setzen sich die Rillen 32 über die Längsrippen 50 in den Kreuzungszeichen 37 fort, wobei der Einschnitt der Rille 32 in den Kreuzungsbereichen 37 nur eine Tiefe bis maximal zum Gewebematerial 49 aufweist.

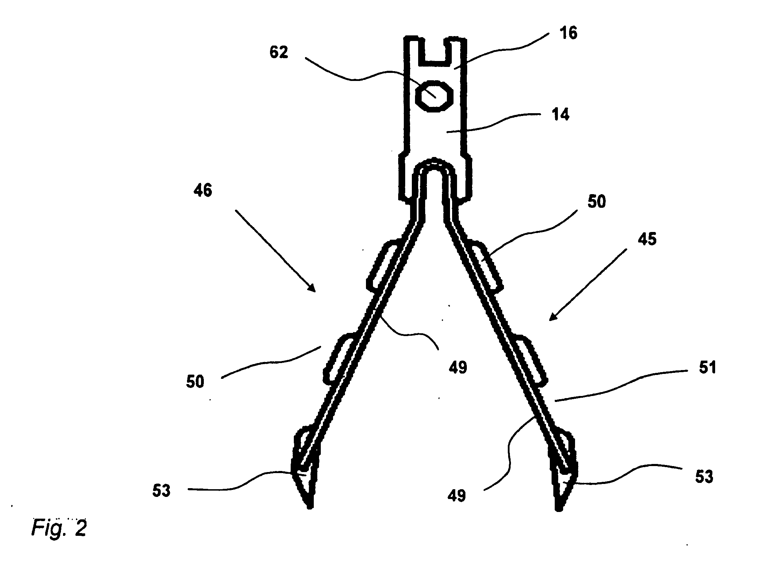

Figur 2 zeigt eine Seitenansicht eines Verbinderelements 10. Die langgezogenen Schenkel 45,46 weisen jeweils die gleiche Länge auf und sind aus einem Gewebematerial 49 gefertigt. An den Außenseiten 47, 48 der Schenkel 45, 46 sind Längsrippen 50 befestigt, wobei die am unteren Ende der Schenkel 45, 46 befestigte Längsrippen 53 über die Gewebeenden hinausragen. Zur Befestigung eines Bandendes 5 mit einem Verbinderelement 10 wird ein Bandende 5 von unten zwischen die beiden Schenkel 45, 46 eingeführt, bis es an das obere Ende des Befestigungsabschnitts 12 anschlägt. Das eingeführte Bandende 5 wird dann von den Schenkeln 45,46 von beiden Seiten umschlossen und entlang der von den Längsrippen 50 gebildeten Zwischenräume 51 mit dem Gewebematerial 49 vernäht. Die Lage der Nähte in den Zwischenräumen 51 der Längsrippen 50 verhindert, dass Antriebsrollen oder Umlenkrollen, durch welche Filterbänder normalerweise durchgeführt werden, in direkten Kontakt mit der Naht kommen. Die Nähte werden dadurch geschont, was die Verbindung insgesamt stabiler macht. Die vorstehenden Längsrippen 53 schützen den Übergang zwischen dem Gewebematerial 49 und dem Bandende 5. Außerdem laufen die vorstehenden Längsrippen 53 dabei spitz zu und schmiegen sich mit der langen Seite an das Bandende 5 an, wodurch die Verbinderanordnung leichter durch Umlaufrollen oder Umlenkrollen geführt werden kann.

Der Befestigungsabschnitt 12 ist aufgrund der aus Gewebematerial 49 gebildeten langgezogenen Schenkel 45,46 längs der Achsen parallel zu dem Verlauf der Zwischenräume 51 biegsam und gleichzeitig aufgrund der an der oberen Seite angebrachten Längsrippen 50, 53 stabil. Weiterhin wird ein Bandende 5 beim Befestigen mit dem Befestigungsabschnitt 12 vollständig von dem Gewebematerial 49 umschlossen, wodurch eine dichte Verbindung erreicht wird.

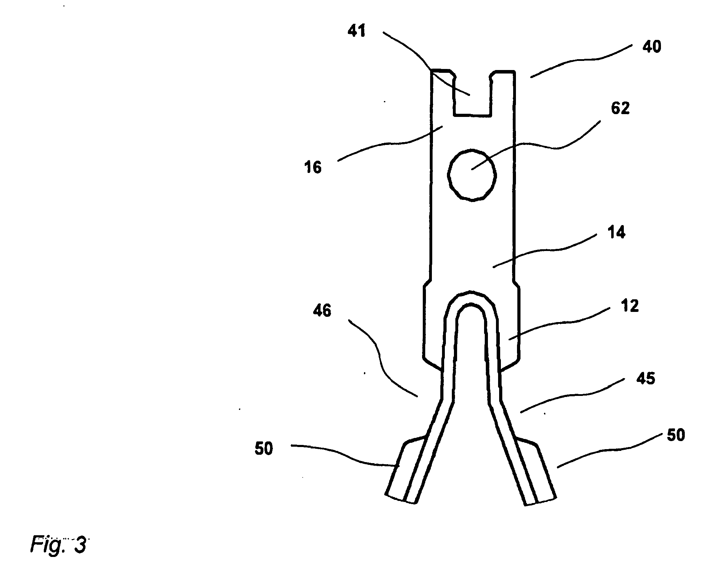

In Figur 3 ist ein vergrößerter Ausschnitt des Verbindungsabschnitts 14 in der Seitenansicht gezeigt. An der oberen Seite des Verbindungsabschnitts 14 ist ein Zahn 40 mit seiner Nut 41 ausgebildet. Die Nut 41 des Zahnes 40 nimmt im ineinandergreifenden Zustand der Verbinderelemente 10 die Feder 43 der korrespondierenden Ausnehmung 42 des jeweils anderen Verbinderelementes 10 auf. Dadurch wird eine formschlüssige Verbindung zwischen den Verbinderlementen 10 erreicht.

In Fig. 4 ist eine Schrägansicht einer erfindungsgemäßen Verbinderanordnung gezeigt. Zwei Verbinderelemente 10 sind in einem ineinandergreifenden Zustand mit einem Verriegelungselement 70 vorhanden, wobei das Verriegelungselement 70 innerhalb der Bohrungen 62 der einzelnen Zähne 40 eingebracht ist. Die erste Zahnreihe des Verbinderprofils 16 des rechten Verbinderelement 10 ist zur verbesserten Übersicht nicht dargestellt. Das Verriegelungselement 70 besteht in dieser Ausführungsform aus einem biegsamen Verschlussdraht 70. Um das Einführen des Verschlussdrahtes 70 in die Bohrungen 62 zu vereinfachen, ist an dem Verschlussdraht 70 ein dünner Federstahldraht (nicht dargestellt) angebracht. Das eingeführte Verriegelungselementes 70 presst die jeweiligen Nut-Federverbindung 41, 43 der einzelnen Zähne 40 und Ausnehmungen 42 zusammen, wodurch ein verstärkter Formschluss der Verbindung erreicht wird.

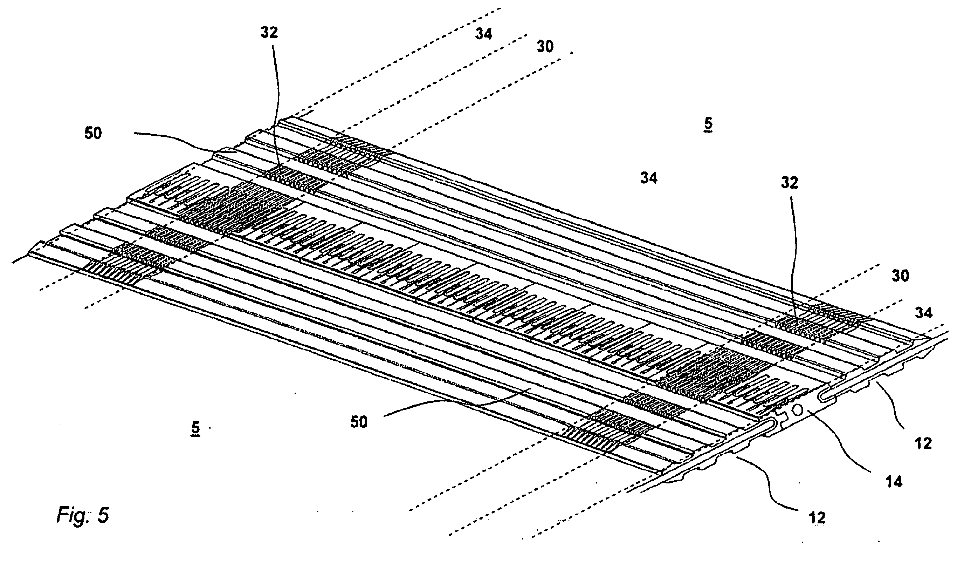

In Fig. 5 ist eine erfindungsgemäße Verbinderanordnung dargestellt. Die beiden Bandenden 5 sind an den Befestigungabschnitten 12 der jeweiligen Verbinderelemente 10 befestigt. Die Verbinderelemente 10 befinden sich im ineinandergreifenden Zustand und sind über einen in die Bohrungen 62 eingebrachten Verschlussdraht miteinander verriegelt. Die Verbinderanordnung kann in den Bereichen der beiden Biegezonen 30 gebogen werden, wodurch eine wannenförmige Form des Verbinderelements erreicht werden kann, die trotz der Biegung weiterhin stabil bleibt.

Die Verbinderanordnung zeichnet sich dadurch aus, dass die Verbinderelemente 10 sowohl im Bereich der Verbindungsprofile 16 aufgrund des Formschlusses der Zähne 40 und Ausnehmungen 42 eine dichte Verbindung zwischen zwei Verbinderelementen 10 ermöglichen, als auch im Bereich zwischen dem Befestigungsabschnitts 12 und dem an dem Gewebematerial 49 befestigten Bandende 5. Der Formschluss bleibt auch im gebogenen Zustand innerhalb der Biegezone 30 bestehen. Das ermöglicht den Einsatz der Verbinderanordnung bei Filterbändern.

## Patentansprüche

1. Verbinderanordnung zum Verbinden von Bandenden (5) mit zwei streifenförmigen Verbinderelementen (10), die jeweils an einer zweiten Längsseite (24) einen Befestigungsabschnitt (12) zum Befestigen an einem Bandende (5) und entlang einer ersten Längsseite (22) einen Verbindungsabschnitt (14) mit einem Verbindungsprofil (6 )aufweisen, welches in ein korrespondierendes Verbindungsprofil (16) des jeweils anderen Verbinderelementes (10) passend eingreift, wobei sich die erste Längsseite (22) und die zweite Längsseite (24) in einer Längsrichtung erstrecken,
wobei das Verbindungsprofil (16) aus vorstehenden Zähnen (40) und dazwischen liegenden Ausnehmungen (42) gebildet ist, wobei sich Zähne (40) und Ausnehmungen (42) abwechselnd entlang der Längsseite (22, 24) eines Verbinderelementes (10) aneinander reihen und die Zähne (40) eines Verbindungsprofils (16) eines Verbinderelementes (10) in.die Ausnehmungen (42) des korrespondierenden Verbindungsprofils (16) des jeweils anderen Verbinderelementes (10) passend eingreifen, und wobei
an den Verbinderelementen (10) jeweils zumindest eine Biegezone (30) zum Biegen des Verbinderelementes (10) in einer Querrichtung ausgebildet ist, welche sich quer zur Längsrichtung erstreckt, wobei eine Biegesteifigkeit in der Biegezone (30) gegenüber einer angrenzenden Normalzone (34) des Verbinderelementes (10) vermindert ist, **dadurch gekennzeichnet, dass**
dass die Verminderung der Biegesteifigkeit in der Biegezone (30) durch eine Änderung einer Querschnittsfläche gegenüber der Querschnittsfläche der angrenzenden Normalzone (34) gebildet ist,
dass die Änderung der Querschnittsfläche in Form von wenigstens einer in der Querrichtung verlaufenden Rille (32) an zumindest einer Oberseite des Verbinderelementes (10) ausgebildet ist, und
dass die wenigstens eine Rille (32) über das Verbindungsprofil (16) und über mindestens eine Zahnoberseite (56) verläuft.

2. Verbinderanordnung nach Anspruch 1,
**dadurch gekennzeichnet,**
**dass** in der Normalzone (34) und der Biegezone (30) Zähne (40) und Ausnehmungen (42) angeordnet sind und
**dass** in der Biegezone (30) die Rillen (32) sich quer von der ersten Längsseite (22) zur zweiten Längsseite (24) über den Befestigungsabschnitt (12) und den Verbindungsabschnitt (14) des Verbinderelementes (10) erstrecken.

3. Verbinderanordnung nach einem der Ansprüche 1 oder 2,
**dadurch gekennzeichnet,**
**dass** der Befestigungsabschnitt (12) mindestens einen langgezogenen Schenkel (45) aufweist und
**dass** an einer Außenseite (48) des Schenkels Längsrippen (50) angeordnet sind, die parallel zur Längsrichtung des Verbinderelementes (10) verlaufen.

4. Verbinderanordnung nach einem der Ansprüche 1 bis 3,
**dadurch gekennzeichnet,**
**dass** sich die wenigstens eine quer verlaufende Rille (32) durch die Längsrippen (50) fortsetzt und die Längsrippen (50) in den Kreuzungsbereichen (37) zwischen den Längsrippen (50) und der Rille (32) unterbrochen sind.

5. Verbinderanordnung nach einem der Ansprüche 1 bis 4,
**dadurch gekennzeichnet,**
**dass** die Biegezone (30) durch ein Material gebildet ist, welches sich von dem Material der angrenzenden Normalzone (34) unterscheidet und dessen Biegesteifigkeit gegenüber der Biegesteifigkeit des Materials der angrenzenden Normalzone (34) herabgesetzt ist.

6. Verbinderanordnung nach einem der Ansprüche 1 bis 5,
**dadurch gekennzeichnet,**
**dass** jeder Zahn (40) eine Durchgangsbohrung (62) in Längsrichtung aufweist und
**dass** in einem ineinandergreifenden Verbindungszustand beider Verbinderelemente (10) die Bohrungen (62) der Zähne (40) beider Verbinderelemente (10) einen Durchgang zur Aufnahme eines Verriegelungselementes (70) bilden.

7. Verriegelungselement für eine Verbinderanordnung nach Anspruch 6,
**dadurch gekennzeichnet,**
**dass** das Verriegelungselement (70) wenigstens einen Normalabschnitt mit einer ersten Biegesteifigkeit und einen Biegeabschnitt mit einer zweiten Biegesteifigkeit aufweist, welche kleiner als die erste Biegesteifigkeit ist.

8. Verriegelungselement nach Anspruch 7,
**dadurch gekennzeichnet,**
**dass** der Biegeabschnitt durch ein Drahtseil und der Normalabschnitt durch ein Stiftelement gebildet sind.

9. Verriegelungselement nach einem der Ansprüche 5 und 7 oder 8,
**dadurch gekennzeichnet,**
**dass** der Biegeabschnitt des Verriegelungselementes (70) im eingesetzten Zustand in der Verbinderanordnung in der Biegezone (30) der Verbinderelemente (10) angeordnet ist.

## Claims

1. Connector arrangement for connecting belt ends (5) with two strip-shaped connector elements (10), which each have on a second longitudinal side (24) a fastening section (12) for fastening on a belt end (5) and along a first longitudinal side (22) a connecting section (14) with a connecting profile (6), which engages in a fitting manner into a corresponding connecting profile (16) of the respective other connector element (10), wherein the first longitudinal side (22) and the second longitudinal side (24) extend in a longitudinal direction,
wherein the connecting profile (16) is formed of projecting teeth (40) and intermediate recesses (42), wherein teeth (40) and recesses (42) are lined up in an alternating manner along the longitudinal side (22, 24) of a connector element (10) and the teeth (40) of a connecting profile (16) of a connector element (10) engage in a fitting manner into the recesses (42) of the corresponding connecting profile (16) of the respective other connector element (10), and wherein on the connector elements (10) at least one bending zone (30) is designed in each case for bending the connector element (10) in a transverse direction extending transversely to the longitudinal direction, wherein a bending stiffness in the bending zone (30) is reduced with respect to an adjoining normal zone (34) of the connector element (10),
**characterized in that**
the reduction of the bending stiffness in the bending zone (30) is formed by a change of a cross-sectional surface with respect to the cross-sectional surface of the adjoining normal zone (34),
**in that** the change of the cross-sectional surface is designed in the form of at least one channel (32) extending in the transverse direction on at least one upper side of the connector element (10), and
**in that** the at least one channel (32) extends across the connecting profile (16) and across at least one tooth upper side (56).

2. Connector arrangement according to claim 1,
**characterized in that**
in the normal zone (34) and the bending zone (30) teeth (40) and recesses (42) are arranged and
**in that** in the bending zone (30) the channels (32) extend transversely from the first longitudinal side (22) to the second longitudinal side (24) across the fastening section (12) and the connecting section (14) of the connector element (10).

3. Connector arrangement according to any one of claims 1 or 2,
**characterized in that**
the fastening section (12) has at least one elongate leg (45) and
**in that** on an external side (48) of the leg longitudinal ribs (50) are arranged which extend parallel to the longitudinal direction of the connector element (10).

4. Connector arrangement according to any one of claims 1 to 3,
**characterized in that**
the at least one transversely extending channel (32) continues through the longitudinal ribs (50) and the longitudinal ribs (50) are interrupted in the intersecting areas (37) between the longitudinal ribs (50) and the channel (32).

5. Connector arrangement according to any one of claims 1 to 4,
**characterized in that**
the bending zone (30) is formed by a material which differs from the material of the adjoining normal zone (34) and the bending stiffness of which is reduced with respect to the bending stiffness of the material of the adjoining normal zone (34).

6. Connector arrangement according to any one of claims 1 to 5,
**characterized in that**
each tooth (40) has a through borehole (62) in the longitudinal direction and **in that** in an engaged connection state of both connector elements (10) the boreholes (62) of the teeth (40) of both connector elements (10) form a passage for receiving a locking element (70).

7. Locking element for a connector arrangement according to claim 6,
**characterized in that**
the locking element (70) has at least one normal section with a first bending stiffness and a bending section with a second bending stiffness which is smaller than the first bending stiffness.

8. Locking element according to claim 7,
**characterized in that**
the bending section is formed by a wire rope and the normal section by a pin element.

9. Locking element according to any one of claims 5 and 7 or 8,
**characterized in that**
in the inserted state the bending section of the locking element (70) is arranged in the connector arrangement in the bending zone (30) of the connector elements (10).

## Revendications

1. Agencement de connecteur pour connecter des extrémités de bande (5) avec deux éléments connecteurs (10) en forme de bandes qui présentent chacun sur un deuxième côté longitudinal (24) une section de fixation (12) pour se fixer à une extrémité de bande (5) et, le long d'un premier côté longitudinal (22), une section de connexion (14) avec un profil de connexion (6) qui s'engage par ajustement dans un profil de connexion (16) correspondant de l'autre élément connecteur (10), dans lequel le premier côté longitudinal (22) et le deuxième côté longitudinal (24) s'étendent dans une direction longitudinale,
dans lequel le profil de connexion (16) est formé de dents saillantes (40) et d'évidements (42) situés entre elles, les dents (40) et les évidements (42) étant juxtaposés en alternance le long du côté longitudinal (22, 24) d'un élément connecteur (10) et les dents (40) d'un profil de connexion (16) d'un élément connecteur (10) s'engageant par ajustement dans les évidements (42) du profil de connexion (16) correspondant de l'autre élément connecteur (10) respectif,
et dans lequel sur les éléments connecteurs (10) est formée au moins une zone de flexion (30) pour plier l'élément connecteur (10) dans une direction transversale qui s'étend transversalement à la direction longitudinale, une rigidité en flexion dans la zone de flexion (30) étant diminuée par rapport à une zone normale (34) adjacente de l'élément connecteur (10),
**caractérisé en ce que** la diminution de la rigidité en flexion dans la zone de flexion (30) est formée par une modification de la surface de section par rapport à la surface de flexion de la zone normale (34) adjacente,
**en ce que** la modification de la surface de flexion est réalisée sous la forme d'au moins une rainure (32) s'étendant dans la direction longitudinale sur au moins une face supérieure de l'élément connecteur (10), et
**en ce que** la rainure (32) au nombre d'au moins une s'étend sur le profil .de connexion (16) et sur au moins une face supérieure de dent (56).

2. Agencement de connecteur selon la revendication 1, **caractérisé en ce que** dans la zone normale (34) et la zone de flexion (30) sont placées des dents (40) et des évidements (42), et
**en ce que**, dans la zone de flexion (30), les rainures (32) s'étendent transversalement du premier côté longitudinal (22) au deuxième côté longitudinal (24) par l'intermédiaire de la section de fixation (12) et de la section de connexion (14) de l'élément connecteur (10).

3. Agencement de connecteur selon l'une des revendications 1 ou 2, **caractérisé en ce que** la section de fixation (12) présente au moins une branche oblongue (45), et
**en ce que** sur une face extérieure (48) de la branche sont placées des membrures longitudinales (50) qui s'étendent parallèlement à la direction longitudinale de l'élément connecteur (10).

4. Agencement de connecteur selon l'une des revendications 1 à 3, **caractérisé en ce que** la rainure (32) d'extension transversale au nombre d'au moins un se poursuit à travers les membrures longitudinales (50) et les membrures longitudinales (50) sont interrompues dans les zones de croisement (37) entre les membrures longitudinales (50) et la rainure (32).

5. Agencement de connecteur selon l'une des revendications 1 à 4, **caractérisé en ce que** la zone de flexion (30) est formée par un matériau qui diffère du matériau de la zone normale (34) adjacente et dont la rigidité en flexion est diminuée par rapport à la rigidité en flexion du matériau de la zone normale (34) adjacente.

6. Agencement de connecteur selon l'une des revendications 1 à 5, **caractérisé en ce que** chaque dent (40) présente une perforation (62) dans la direction longitudinale, et
**en ce que**, dans un état de connexion mutuelle des deux éléments connecteurs (10), les perforations (62) des dents (40) des deux éléments connecteurs (10) forment un passage destiné à recevoir un élément un élément de verrouillage (70).

7. Élément de verrouillage pour un agencement de connecteur selon la revendication 6, **caractérisé en ce que** l'élément de verrouillage (70) présente au moins une section normale ayant une première rigidité en flexion et une section de flexion ayant une deuxième rigidité en flexion qui est plus petite que la première rigidité en flexion.

8. Élément de verrouillage selon la revendication 7, **caractérisé en ce que** la section de flexion est formée par un câble et la section normale par un élément formant goupille.

9. Élément de verrouillage selon l'une des revendications 5 et 7 ou 8, **caractérisé en ce que**, dans l'état inséré, la section de flexion de l'élément de verrouillage (70) est placée dans l'agencement de connecteur dans la zone de flexion (30) des éléments connecteurs (10).
